# EUROPÄISCHE PATENTANMELDUNG

(11) **EP 4 089 864 A1**
(43) Veröffentlichungstag der Anmeldung: **16.11.2022**
(21) Anmeldenummer: 22172432.1
(22) Anmeldetag: 10.05.2022
(51) Int. Cl.: H02G 5/00, H01R 4/48, H01R 9/00, H01R 11/09

(54) **KONTAKTEINRICHTUNG, HEADER UND KONTAKTSYSTEM FÜR EINE DOPPELSTROMSCHIENE**

(30) Priorität: 11.05.2021 DE 102021112304
(71) Anmelder: Lisa Dräxlmaier GmbH, 84137 Vilsbiburg (DE)
(72) Erfinder: Himmel, Jörg, 84072 Au i. d. Hallertau (DE); Neumayer, Franziska, 84144 Geisenhausen (DE); Hammerl, Reinhold, 85748 Garching (DE)

(57) **Zusammenfassung**

Die vorliegende Erfindung bezieht sich auf eine Kontakteinrichtung (104) für eine Doppelstromschiene (102), wobei die Doppelstromschiene (102) zwei Stromschienen (108) aufweist, die zu einem Stapel übereinandergestapelt sind, wobei die Kontakteinrichtung (104) pro Stromschiene (108) eine geradzahlige Anzahl Steckverbinder (110) aufweist, die symmetrisch zu einer Symmetrieachse (112) der Kontakteinrichtung (104) angeordnet sind, wobei die Steckverbinder (110) beider Stromschienen (108) in einer gemeinsamen Steckerebene (114) ausgerichtet sind.

## Beschreibung

### Technisches Gebiet

Die vorliegende Erfindung betrifft eine Kontakteinrichtung für eine Doppelstromschiene, einen Header für eine Doppelstromschiene, sowie ein Kontaktsystem für eine Doppelstromschiene.

### Stand der Technik

Die vorliegende Erfindung wird im Folgenden hauptsächlich in Verbindung mit Fahrzeugbordnetzen beschrieben. Die Erfindung kann aber in jeder Anwendung genutzt werden, in welcher elektrische Lasten, insbesondere große elektrische Lasten mit erheblichen Leistungen von beispielsweise mehr als 10kW bzw. mit erheblichen Spannungen von beispielsweise mehr als 100V, übertragen werden.

In einem Niedervolt-Bordnetz eines Fahrzeugs kann elektrisch leitendes Blech einer Karosserie als Masse verwendet werden, wodurch eine Leitungslänge von Rückleitungen verkürzt werden kann. So kann näherungsweise auf die Hälfte aller Kabel im Fahrzeug verzichtet werden.

Zum Übertragen großer elektrischer Lasten kann KFZ-Hochvoltspannung mit beispielsweise mehr als 300V oder sogar mehr als 700V verwendet werden. Für die KFZ-Hochvoltspannung können Stromschienen aus massivem Metallmaterial verwendet werden. Wenn Stromschienen verwendet werden, können separate Plus- und Minus-Schienen verwendet werden um die erforderliche Sicherheit (Berührschutz, Schutz gegen Lichtbogen beziehungsweise Spannungsdurchschlag etc.) zu gewährleisten. Die Plus- und Minus-Schienen können als Doppelschiene, d.h. flächig mit geringem Abstand (<5mm) aufeinanderliegend ausgebildet sein.

### Beschreibung der Erfindung

Eine Aufgabe der Erfindung ist es daher, unter Einsatz konstruktiv möglichst einfacher Mittel eine verbesserte Kontakteinrichtung für eine Doppelstromschiene, einen verbesserten Header für eine Doppelstromschiene, sowie ein verbessertes Kontaktsystem für eine Doppelstromschiene bereitzustellen. Eine Verbesserung kann hierbei beispielsweise eine verbesserte Abstrahlcharakteristik, insbesondere eine reduzierte Abstrahlung elektromagnetischer Felder betreffen.

Die Aufgabe wird durch die Gegenstände des unabhängigen Anspruchs gelöst. Vorteilhafte Weiterbildungen der Erfindung sind in den abhängigen Ansprüchen, der Beschreibung und den begleitenden Figuren angegeben.

In einem elektrisch angetriebenen Fahrzeug sind auch bei KFZ-Hochvoltspannung große elektrische Stromflüsse erforderlich, um eine Antriebsleistung beziehungsweise Brems- oder Rekuperationsleistung zu übertragen. Rund um stromdurchflossene Leiter des Fahrzeugs werden durch die Stromflüsse elektromagnetische Felder erzeugt. Um eine Abstrahlung der Felder zu verringern oder auch zu verhindern, können die Leiter geschirmt werden. Alternativ oder ergänzend können die Leiter für die Hinleitung und die Rückleitung möglichst parallel und nah zusammen angeordnet werden, da sich die durch die entgegengesetzten Stromflüsse verursachten elektromagnetischen Felder gegenseitig auslöschen.

Auch bei Stromschienen können die Stromschiene für die Hinleitung und die Stromschiene für die Rückleitung sehr nahe zusammen angeordnet werden, indem die beiden Stromschienen deckungsgleich aufeinandergestapelt werden. Die gestapelten Stromschienen sind dabei einzeln elektrisch isoliert. Diese Anordnung kann als Doppelstromschiene bezeichnet werden.

Um den Effekt der Auslöschung auch an Kontaktstellen aufrecht zu erhalten, wird bei dem hier vorgestellten Ansatz ein Doppel-Parallelkontakt vorgeschlagen, der die enge Führung der Stromflüsse auch an der Kontaktstelle ermöglicht.

Es wird eine Kontakteinrichtung für eine Doppelstromschiene vorgeschlagen, wobei die Doppelstromschiene zwei Stromschienen aufweist, die zu einem Stapel übereinandergestapelt sind, wobei die Kontakteinrichtung pro Stromschiene eine geradzahlige Anzahl Steckverbinder aufweist, die symmetrisch zu einer Symmetrieachse der Kontakteinrichtung angeordnet sind, wobei die Steckverbinder beider Stromschienen in einer gemeinsamen Steckerebene ausgerichtet sind.

Weiterhin wird ein Header für eine Doppelstromschiene vorgeschlagen, wobei der Header dazu ausgebildet ist, eine Kontakteinrichtung gemäß dem hier vorgestellten Ansatz zu kontaktieren, wobei der Header pro Stromschiene die geradzahlige Anzahl Steckverbinder aufweist, die symmetrisch zu der Symmetrieachse angeordnet sind, wobei die Steckverbinder beider Stromschienen in der gemeinsamen Steckerebene ausgerichtet sind.

Schließlich wird ein Kontaktsystem für eine Doppelstromschiene vorgeschlagen, wobei die Doppelstromschiene eine Kontakteinrichtung gemäß dem hier vorgestellten Ansatz aufweist und die Stromschienen elektrisch leitend mit den Steckverbindern verbunden sind, wobei die Steckverbinder der Kontakteinrichtung elektrisch leitend mit einem Header gemäß dem hier vorgestellten Ansatz verbunden sind.

Unter einer Stromschiene kann ein massiver Streifen Metallblech verstanden werden. Die Stromschiene kann beispielsweise aus einem Aluminiummaterial oder einem Kupfermaterial sein. Aluminium beziehungsweise Aluminiumlegierungen weisen eine gute elektrische Leitfähigkeit bei geringem Gewicht und geringen Materialkosten auf. Kupfer beziehungsweise Kupferlegierungen können eine höhere elektrische Leitfähigkeit als Aluminium beziehungsweise Aluminiumlegierungen aufweisen. Zusätzlich kann Kupfer beziehungsweise eine Kupferlegierung oxidationsbeständig sein und einen geringen Übergangswiderstand aufweisen. Die Stromschiene kann einen rechteckigen Leitungsquerschnitt aufweisen. Dabei kann die Stromschiene länglich sein und eine Länge von beispielsweise mehr als 0,5 m, vorzugsweise mehr als 1 m, und eine Breite von beispielsweise zwischen 0,5 cm und 10 cm, vorzugsweise zwischen 1 cm und 5 cm, aufweisen. Die Stromschiene kann ferner eine Dicke von beispielsweise zwischen 1 mm und 10 mm aufweisen. Die Stromschiene kann auf allen Seiten eine Isolierung aufweisen, d.h. von einer Isolierung umhüllt sein. Die Isolierung kann beispielsweise aus einem Kunststoffmaterial sein. Das Kunststoffmaterial kann ein Thermoplast sein. Die Stromschiene kann mit dem Thermoplast umspritzt sein. Die Isolierung kann Eigenschaften aufweisen, die für KFZ-Hochvoltspannung von bis zu 1000 Volt Gleichstrom ausgelegt sind. Insbesondere kann eine Materialstärke der Isolierung eine Durchschlagfestigkeit gegen die KFZ-Hochvoltspannung sicherstellen.

Eine Doppelstromschiene kann aus zwei Stromschienen mit gleichen Abmessungen bestehen. Die beiden Stromschienen können an Flachseiten aufeinandergestapelt sein. Die Stromschienen können deckungsgleich angeordnet sein. Die Doppelstromschiene kann mit einem Kunststoffmaterial ummantelt sein. Alternativ oder ergänzend kann die Doppelstromschiene mit einem Gewebematerial ummantelt sein. Das Gewebematerial kann beispielsweise als Gewebeband um die Doppelstromschiene gewickelt sein. In einem Kontaktbereich kann die Stromschiene freiliegen, d.h. können z.B. die Isolierung und Ummantelung zumindest bereichsweise entfernt worden sein. Die Doppelstromschiene kann auch zusätzlich durch einen elektrisch leitenden Mantel gegen die Abstrahlung von elektromagnetischen Feldern geschirmt sein.

Die eine Stromschiene der Doppelstromschiene kann in verbautem Zustand mit einem Pluspotenzial der KFZ-Hochvoltspannung verbunden sein. Die andere Stromschiene der Doppelstromschiene kann mit einem Minuspotenzial der KFZ-Hochvoltspannung verbunden sein. Stromflüsse durch die beiden Stromschienen fließen so in entgegengesetzte Richtungen und sind gleich groß. Durch die räumliche Nähe der Stromschienen in der Doppelstromschiene kompensieren sich die resultierenden elektromagnetischen Felder im Wesentlichen vollständig.

Ein Steckverbinder kann ein steckbarer elektrischer Verbinder sein. Der Steckverbinder kann verriegelbar sein. Der Steckverbinder kann auch wieder lösbar sein. Der Steckverbinder kann axial steckbar sein. Der Steckverbinder kann eine Mechanik und/oder Kinematik aufweisen, die dazu ausgebildet ist, eine Anpresskraft auf zwei Kontaktpartnern zu erzeugen, um einen geringen Übergangswiderstand zu ermöglichen. Der Steckverbinder kann eine begrenzte Stromtragfähigkeit aufweisen. Die Stromtragfähigkeit des einzelnen Steckverbinders kann kleiner sein als eine Stromtragfähigkeit der angeschlossenen Stromschiene. Um die Stromtragfähigkeit der Stromschiene zu erreichen beziehungsweise zu übertreffen können mehrere Steckverbinder elektrisch parallelgeschaltet werden. Beispielsweise können bei dem hier vorgestellten Ansatz zwei, vier, sechs, acht oder zehn Steckverbinder parallelgeschaltet werden. Die Steckverbinder können dabei alle gleichartig sein. Ein gesamter Stromfluss der Stromschiene wird so auf mehrere Lastpfade aufgeteilt. Der Stromfluss wird insbesondere gleich auf die Lastpfade verteilt. Die Stromtragfähigkeiten der Steckverbinder addieren sich dabei.

Eine Symmetrieachse der Kontakteinrichtung kann an der axialen Steckrichtung der Steckverbinder ausgerichtet sein. Die Symmetrieachse kann durch eine geometrische Mitte der Kontakteinrichtung im Bereich von deren Steckverbindern verlaufen. Die Steckverbinder einer Stromschiene können sich bezogen auf die Symmetrieachse paarweise gegenüberliegen. Wenn durch die Kontakteinrichtung Strom fließt, entstehen rund um die einzelnen Lastpfade elektromagnetische Felder. Durch die Symmetrie der Lastpfade zu der Symmetrieachse kombinieren sich die einzelnen gleichgerichteten elektromagnetischen Felder zu einem resultierenden elektromagnetischen Feld entlang der Symmetrieachse. Da die Steckverbinder und somit die Lastpfade beider Stromschienen symmetrisch zur Symmetrieachse angeordnet sind, ergeben sich zwei entgegengesetzte, gleich starke resultierende elektromagnetische Felder entlang der Symmetrieachse, die sich gegenseitig auslöschen.

Eine Steckerebene kann durch alle Steckverbinder verlaufen. Die Symmetrieachse kann in der Steckerebene verlaufen. Durch die Anordnung in der Steckerebene können die Steckverbinder in einer Reihe nebeneinander angeordnet sein.

Ein Header kann ein Gegenstück zu der Kontakteinrichtung sein. Der Header kann Gegenstücke zu den Steckverbindern aufweisen. Der Header kann entsprechend der Kontakteinrichtung ausgeführt sein.

Die Steckverbinder können als Rundsteckverbinder und/oder als Flachsteckverbinder ausgeführt sein. Bei einem Flachsteckverbinder können zwei Flachleiter mit Flachseiten aneinandergepresst werden. Dadurch kann eine große Kontaktfläche erreicht werden. Bei einem Rundsteckverbinder kann eine Umfangsfläche eines Rundleiters in einer Buchse angeordnet sein. Dabei kann ebenfalls eine große Kontaktfläche erreicht werden. Flachsteckverbinder können einfacher montiert werden als Rundsteckverbinder, da die Flachleiter einteilig mit zuleitenden Flachleitern verbunden sein können. Bei Rundsteckverbindern ist ein Übergang von dem flachen Querschnitt der Stromschiene zu dem runden Querschnitt des Rundsteckverbinders erforderlich.

Die Flachsteckverbinder können über Flachkontakte mit der jeweiligen Stromschiene verbunden sein. Die Flachkontakte können symmetrisch zu einer Symmetrieebene durch die Symmetrieachse angeordnet sein. Die Symmetrieebene kann normal zu der Steckerebene ausgerichtet sein. Ein Flachkontakt kann eine kleine Stromschiene sein. Eine Anzahl Flachkontakte kann der Anzahl der Steckverbinder entsprechen. Insbesondere kann die Anzahl geradzahlig sein. Der einzelne Flachkontakt kann ein Streifen eines Metallblechs sein. Die Flachkontakte können aus einem Kupfermaterial sein. Der einzelne Flachkontakt kann einen geringeren Leitungsquerschnitt als die Stromschiene aufweisen. Der einzelne Flachkontakt kann direkt einen Kontaktpartner im Flachsteckverbinder ausbilden. Eine Symmetrieebene der Flachkontakte kann einer mittigen Symmetrieebene längs der Doppelstromschiene entsprechen. Durch die Symmetrie zur Symmetrieebene kann die gegenseitige Auslöschung der elektromagnetischen Felder auch im Bereich der Flachkontakte gewährleistet werden.

Die Flachkontakte können als Stanzbiegeteile ausgeführt sein. Die Flachkontakte können je einen an der jeweiligen Stromschiene ausgerichteten Fügebereich und je einen am jeweiligen Steckverbinder ausgerichteten Steckerbereich aufweisen. Die Flachkontakte können im Fügebereich mit der jeweiligen Stromschiene verschweißt werden. Ein Steckerbereich kann im jeweiligen Flachsteckverbinder angeordnet werden. Der Fügebereich und der Steckerbereich können in einem Winkel zueinander ausgerichtet sein.

Der Fügebereich und der Steckerbereich können um 90° zueinander gebogen sein. Der Fügebereich ist an der jeweiligen Stromschiene ausgerichtet. Der Steckerbereich und damit der Flachsteckverbinder kann senkrecht zu der Stromschiene ausgerichtet sein. Die Steckerbereiche der Flachkontakte können parallel zueinander ausgerichtet sein. Die Flachsteckverbinder können parallel zu der Symmetrieebene ausgerichtet sein. Dadurch können die Flachsteckverbinder eng nebeneinander angeordnet werden und die Kontakteinrichtung wenig Platz beanspruchen.

Die Steckverbinder der ersten Stromschiene können zwischen den Steckverbindern der zweiten Stromschiene angeordnet sein. Die Steckverbinder der ersten Stromschiene können näher beieinander angeordnet sein als die Steckverbinder der zweiten Stromschiene.

### Kurze Figurenbeschreibung

Nachfolgend wird ein vorteilhaftes Ausführungsbeispiel der Erfindung unter Bezugnahme auf die begleitende Figur erläutert. Es zeigt:

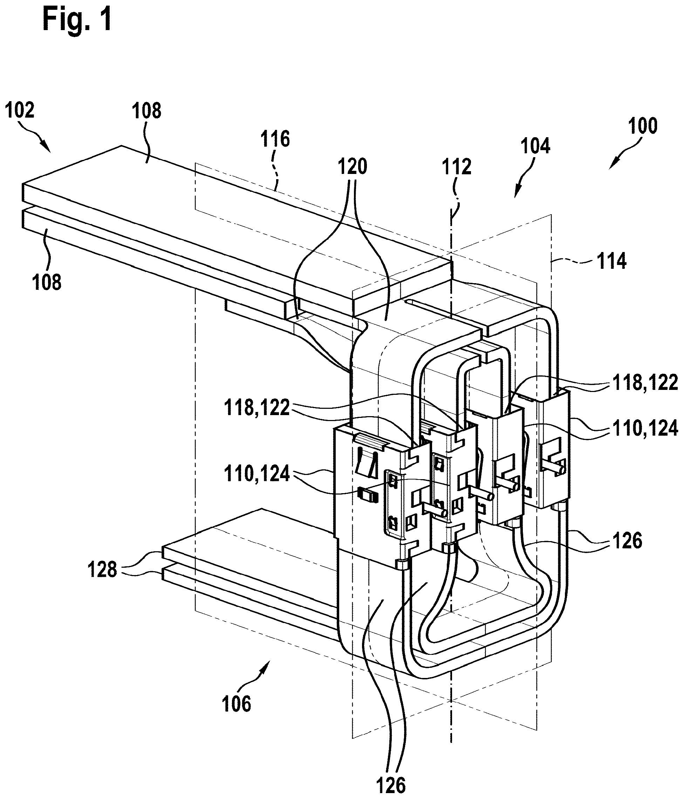

- Fig. 1: eine Darstellung eines Kontaktsystems gemäß einem Ausführungsbeispiel.

Die Figur ist lediglich eine schematische Darstellung und dient nur der Erläuterung der Erfindung. Gleiche oder gleichwirkende Elemente sind durchgängig mit den gleichen Bezugszeichen versehen.

### Detaillierte Beschreibung

Fig. 1 zeigt eine Darstellung eines Kontaktsystems 100 gemäß einem Ausführungsbeispiel. Das Kontaktsystem 100 ist an einer Schnittstelle zwischen einer Doppelstromschiene 102 und einer nicht dargestellten Komponente eines KFZ-Hochvoltsystems angeordnet. Das Kontaktsystem 100 kann alternativ auch an einer Schnittstelle zwischen zwei Doppelstromschienen 102 angeordnet sein. Das Kontaktsystem 100 besteht aus einer Kontakteinrichtung 104 und einem Header 106. Der Header 106 ist das passende Gegenstück zur Kontakteinrichtung 104. Die Kontakteinrichtung 104 ist mit der Doppelstromschiene 102 verbunden. Der Header 106 ist mit der Komponente verbunden.

Die Doppelstromschiene 102 weist zwei Stromschienen 108 auf. Jede der Stromschienen 108 ist ein Streifen Metallblech mit einem rechteckigen Leitungsquerschnitt. Die Stromschienen 108 sind hier aus einem Aluminiummaterial. Die Stromschienen 108 der Doppelstromschiene 102 sind zu einem Stapel übereinandergestapelt und verlaufen parallel zueinander. Die Stromschienen 108 sind sowohl gegeneinander als auch von einer Umgebung elektrisch isoliert. Im Betrieb übertragen die Stromschienen Gleichstrom. Dabei liegt eine der Stromschienen 108 auf einem Pluspotenzial einer KFZ-Hochvoltspannung. Die andere Stromschiene 108 liegt auf einem Minuspotenzial der KFZ-Hochvoltspannung. Stromflüsse durch die Stromschienen 108 sind so entgegengesetzt und gleich groß. Durch den parallelen Verlauf und die enge Anordnung der Stromschienen 108 in der Doppelstromschiene 102 löschen sich aus den Stromflüssen resultierende elektromagnetische Felder gegenseitig aus.

Um diese Auslöschung auch an der Schnittstelle aufrechtzuerhalten weist das Kontaktsystem 100 vier parallel angeordnete Steckverbinder 110 auf. Hier sind die Steckverbinder 110 Flachsteckverbinder. Alternativ können die Steckverbinder 110 auch Rundsteckverbinder sein. Die Steckverbinder 110 sind paarweise symmetrisch zu einer Symmetrieachse 112 des Kontaktsystems 100 angeordnet. Die Steckverbinder 110 bilden ein inneres Paar und ein äußeres Paar. Die Steckverbinder 110 der Paare sind jeweils elektrisch parallelgeschaltet. Das innere Paar ist mit der einen Stromschiene 108 verbunden. Das äußere Paar ist mit der anderen Stromschiene 108 verbunden. Durch die parallel geschalteten Steckverbinder 110 teilt sich der Stromfluss jeder Stromschiene 108 in zwei gleiche Lastpfade auf.

Die Steckverbinder 108 sind alle in einer Steckerebene 114 des Kontaktsystems 100 angeordnet. Die Steckerebene 114 ist senkrecht zu einer Symmetrieebene 116 der Doppelstromschiene 102 ausgerichtet. Die Symmetrieachse 112 ist die Schnittgerade der Steckerebene 114 und der Symmetrieebene 116.

In einem Ausführungsbeispiel sind zwischen den Stromschienen 112 der Doppelstromscheine 102 und den Steckverbindern 110 Flachkontakte 118 angeordnet. Die Flachkontakte 118 sind hier aus einem Kupfermaterial. Die Flachkontakte 118 sind Stanzbiegeteile. Eine Stanzkontur der Flachkontakte 118 ist jeweils L-förmig. Die Flachkontakte 118 sind symmetrisch zu der Symmetrieebene 116 angeordnet. Die Flachkontakte 118 weisen jeweils einen geringeren Leitungsquerschnitt auf als die Stromschienen 108. Die Flachkontakte 118 weisen jeweils einen Fügebereich 120 und einen Steckerbereich 122 auf. Der Fügebereich 120 ist parallel zu der jeweiligen Stromschiene 108 ausgerichtet und elektrisch leitend mit dieser verbunden. Der Steckerbereich 122 ist an dem jeweiligen Steckverbinder 110 ausgerichtet.

In einem Ausführungsbeispiel sind die Steckerbereiche 122 jeweils um 90° zu den Fügebereichen 120 abgewinkelt. Dadurch stehen die Steckerbereiche senkrecht zu der Steckerebene 114 und parallel zu der Symmetrieebene 116. Die vier Steckerbereiche 122 aller Flachkontakte 118 sind so parallel zueinander ausgerichtet.

In einem Ausführungsbeispiel bilden die Flachkontakte 118 direkt die Kontaktpartner der Steckverbinder 110 aus. Dabei weisen die Steckverbinder 110 jeweils einen Käfig 124 auf, der ein Ende des Steckerbereichs 122 des jeweiligen Flachkontakts 118 umschließt. In dem Käfig 124 ist eine Mechanik angeordnet, die den Steckerbereich 122 gegen eine entsprechende Kontaktfahne 126 des Headers 106 presst.

Der Header 106 weist zwei Kontakte 128 auf, die jeweils zwei Kontaktfahnen 126 aufweisen. Die Kontakte 128 sind aus einem Kupfermaterial. Die Kontakte 128 sind wie die Flachkontakte 118 Stanzbiegeteile. Die Stanzkontur der Kontakte 128 ist T-förmig. Die Kontaktfahnen 126 sind senkrecht zu einem Zentralbereich der Kontakte 128 ausgerichtet. Die Kontaktfahnen 126 zu dem inneren Paar der Steckverbinder 110 sind jeweils um mehr als 90° und dann wieder zurück in die Senkrechte gebogen, um einen geringen Abstand der Steckverbinder 110 zu ermöglichen.

Mit anderen Worten wird ein Kontaktsystem eine Reihenflachsteckers für ein Doppelschienen-Energieübertragungssystem vorgestellt.

Zur Übertragung elektrischer Energie können neben klassischen Rundleiter- und Einzelschienensystemen im Bereich der E-Mobilität auch Doppelschienensysteme eingesetzt werden, da sie durch Feldauslöschung Vorteile bezüglich geringerer elektromagnetischer Feldabstrahlung aufweisen. Die Feldauslöschung resultiert aus einer geometrischen Anordnung von deckungsgleich übereinanderliegenden Reckteckschienen in möglichst geringem Abstand zueinander. Für die Anbindung dieser Doppelschienensysteme an Komponenten wie Ladedosen, Schaltboxen oder Batterien sind Schnittstellen mit einem Kontaktierungssystem erforderlich.

Der vorliegende Ansatz stellt ein Kontaktierungssystem vor, das beide Potentiale über herkömmliche Steckkontakte so verbindet, dass die Kontakte paarweise symmetrisch zur Mitte der Flachleiter und von innen nach außen angeordnet sind und sich dadurch die elektromagnetischen Felder gegenseitig aufheben.

Die Stromübertragung der beiden Potentiale erfolgt herkömmlich mittels Steckkontakten durch nebeneinander angeordnete Kontakte. Dadurch werden die elektromagnetischen Felder im Kontaktbereich gegeneinander verschoben und können sich nicht mehr vollständig neutralisieren.

Durch die paarweise symmetrische Anordnung heben sich die Verschiebungen der Felder gegenseitig auf, wodurch sich die Felder im gesamten Steckbereich vollständig neutralisieren.

Im Rahmen der steigenden elektrischen Leistungsanforderungen im Rahmen der E-Mobilität rückt der Aspekt des Insassenschutzes vor elektromagnetischen Belastungen (ICNIRP) immer stärker in den Fokus. Hochvolt (HV)-Doppelschienensysteme können hohe Energiemengen bei gleichzeitig geringer elektromagnetischer Feldabstrahlung transportieren. Das Schienensystem benötigt geeignete außenraumtaugliche Schnittstellen. Durch das vorgestellte Kontaktsystem ist die Doppelschiene im Bauraum als Schnittstelle zur Schaltbox oder Batterie einsetzbar.

Der hier vorgestellte Ansatz ist durch Auswahl der Steckkontakte und Anzahl der Kontaktpaare prinzipiell skalierbar und für beliebige Leistungsbereiche einsetzbar. Das Kontaktsystem ist im Steckbereich neutral hinsichtlich elektromagnetischen Feldern.

Die elektrische Verbindung erfolgt durch herkömmliche Steckverbinder, die baugleich sind und jeweils paarweise und symmetrisch in der Kontaktsymmetrieebene angeordnet sind. Als herkömmliche Steckverbinder gelten in diesem Sinne alle Flach- und Rundsteckverbindungen, die axial zusammengeführt werden und im zusammengeführten Zustand - mit oder ohne zusätzliche Maßnahmen wie z.B. Verriegelungskinematiken - eine elektrische Verbindung herstellen.

Die Symmetrieebene der Stromschienen steht senkrecht auf den Stromschienen und verläuft durch ihre neutrale Faser. Im Kontaktbereich liegen die Mittelpunkte der Kontakte alle auf einer Ebene, die senkrecht zur Stromschienen-Symmetrieebene steht. Innerhalb der Kontakt-Symmetrieebene sind alle Kontaktpaare jeweils symmetrisch zur Symmetrieachse der Lastpfade angeordnet.

Da durch diese Konfiguration auch die Massemittelpunkte der Kontaktpaare und damit auch die Zentren der elektromagnetischen Felder auf der Symmetrieachse liegen, neutralisieren sich die Felder vollständig. Damit entstehen durch den Kontaktbereich selbst keine elektromagnetischen Felder.

Die Kontakt-Symmetrieebene und damit die Lastpfad-Achse können prinzipbedingt jeden Winkel zu Schienen-Symmetrieachse einnehmen, solange beide Symmetrieebenen senkrecht zueinanderstehen. Dadurch können 90° Steckvarianten ebenso abgebildet werden, wie 180° Varianten (und somit z.B. auch Inline-Verbinder).

Da es sich bei der vorhergehend detailliert beschriebenen Vorrichtungen und Verfahren um Ausführungsbeispiele handelt, können sie in üblicher Weise vom Fachmann in einem weiten Umfang modifiziert werden, ohne den Bereich der Erfindung zu verlassen. Insbesondere sind die mechanischen Anordnungen und die Größenverhältnisse der einzelnen Elemente zueinander lediglich beispielhaft

### BEZUGSZEICHENLISTE

- 100: Kontaktsystem
- 102: Doppelstromschiene
- 104: Kontakteinrichtung
- 106: Header
- 108: Stromschiene
- 110: Steckverbinder
- 112: Symmetrieachse
- 114: Steckerebene
- 116: Symmetrieebene
- 118: Flachkontakt
- 120: Fügebereich
- 122: Steckerbereich
- 124: Käfig
- 126: Kontaktfahne
- 128: Kontakt

## Patentansprüche

1. Kontakteinrichtung (104) für eine Doppelstromschiene (102), wobei die Doppelstromschiene (102) zwei Stromschienen (108) aufweist, die zu einem Stapel übereinandergestapelt sind, wobei die Kontakteinrichtung (104) pro Stromschiene (108) eine geradzahlige Anzahl Steckverbinder (110) aufweist, die symmetrisch zu einer Symmetrieachse (112) der Kontakteinrichtung (104) angeordnet sind, wobei die Steckverbinder (110) beider Stromschienen (108) in einer gemeinsamen Steckerebene (114) ausgerichtet sind.

2. Kontakteinrichtung (104) gemäß Anspruch 1, bei der zumindest die Steckverbinder (110) einer der Stromschienen (108) als Rundsteckverbinder ausgeführt sind.

3. Kontakteinrichtung (104) gemäß einem der vorhergehenden Ansprüche, bei der zumindest die Steckverbinder (110) einer der Stromschienen (108) als Flachsteckverbinder ausgeführt sind.

4. Kontakteinrichtung (104) gemäß Anspruch 3, bei der die Flachsteckverbinder über Flachkontakte (118) mit der jeweiligen Stromschiene (108) verbunden sind, wobei die Flachkontakte (118) symmetrisch zu einer Symmetrieebene (116) durch die Symmetrieachse (112) angeordnet sind, wobei die Symmetrieebene (116) normal zu der Steckerebene (114) ausgerichtet ist.

5. Kontakteinrichtung (104) gemäß Anspruch 4, bei der die Flachkontakte (118) als Stanzbiegeteile ausgeführt sind, wobei die Flachkontakte (118) je einen an der jeweiligen Stromschiene (108) ausgerichteten Fügebereich (120) und je einen am jeweiligen Steckverbinder (110) ausgerichteten Steckerbereich (122) aufweisen.

6. Kontakteinrichtung (104) gemäß Anspruch 5, bei der der Fügebereich (120) und der Steckerbereich (122) um 90° zueinander gebogen sind.

7. Kontakteinrichtung (104) gemäß einem der Ansprüche 3 bis 6, bei der die Flachsteckverbinder parallel zu der Symmetrieebene (116) ausgerichtet sind.

8. Kontakteinrichtung (104) gemäß einem der vorhergehenden Ansprüche, bei der die Steckverbinder (110) der ersten Stromschiene (108) zwischen den Steckverbindern (110) der zweiten Stromschiene (108) angeordnet sind.

9. Header (106) für eine Doppelstromschiene (102), wobei der Header (106) dazu ausgebildet ist, eine Kontakteinrichtung (104) gemäß einem der Ansprüche 1 bis 8 zu kontaktieren und pro Stromschiene (108) die geradzahlige Anzahl Steckverbinder (110) aufweist, die symmetrisch zu der Symmetrieachse (112) angeordnet sind, wobei die Steckverbinder (110) beider Stromschienen (108) in der gemeinsamen Steckerebene (114) ausgerichtet sind.

10. Kontaktsystem (100) für eine Doppelstromschiene (102), wobei die Doppelstromschiene (102) eine Kontakteinrichtung (104) gemäß einem der Ansprüche 1 bis 8 aufweist und die Stromschienen (108) elektrisch mit den Steckverbindern (110) verbunden sind, wobei die Steckverbinder (110) der Kontakteinrichtung (104) elektrisch leitend mit einem Header (106) gemäß Anspruch 9 verbunden sind.
